## Europäisches Patentamt

## European Patent Office

## Office européen des brevets

(19)

(11) Veröffentlichungsnummer: **0 224 230**
**A2**

(12) **EUROPÄISCHE PATENTANMELDUNG**

(21) Anmeldenummer: 86116233.7

(51) Int. Cl.4: **G01N 27/90**

(22) Anmeldetag: 24.11.86

(30) Priorität: 28.11.85 DE 3542159

(43) Veröffentlichungstag der Anmeldung:
03.06.87 Patentblatt 87/23

(84) Benannte Vertragsstaaten:
**DE FR GB IT SE**

(71) Anmelder: **Nukem GmbH**
**Rodenbacher Chaussee 6 Postfach 11 00 80**
**D-6450 Hanau 11(DE)**

(72) Erfinder: **Hüschelrath, Gerhard, Dr.**
**Beethovenstrasse 6**
**D-8752 Laufach-Frohnhofen(DE)**

(74) Vertreter: **Stoffregen, Hans-Herbert, Dr.**
**Dipl.-Phys. et al**
**Salzstrasse 11a**
**D-6450 Hanau/Main 1(DE)**

(54) **Verfahren und Vorrichtung zur Werkstoffprüfung nach dem Wirbelstromprinzip.**

(57) Gegenstand der Erfindung ist ein Verfahren und eine Vorrichtung zur Werkstoffprüfung nach dem Wirbelstromprinzip. In einer gegenüber Prüflingen bewegten Spule (30) werden magnetische Wechselfelder mit wahlweise unterschiedlichen Frequenzen erzeugt, die im jeweiligen Prüfling Wirbelströme induzieren, die in der Spule (30) ein sekundäres Feld hervorrufen. Eine Anzahl von Prüflingen, die jeweils gleichen Aufbau und gleiche Abmessungen haben, werden gemessen. Die Meßwerte werden gespeichert. Danach werden die Koordinaten des Schwerpunkts der Meßwerte in der komplexen Ebene bestimmt. Anschließend wird der Phasenwinkel derjenigen Achse bestimmt, die in Längsrichtung durch das von den Meßwerten in der komplexen Ebene gebildete Feld (20) verläuft. Darauf werden der Schwerpunkt in den Nullpunkt des Koordinatensystems und die Achse in eine Koordinatenachse gedreht. Sodann wird eine eine Fehlergrenze festlegende Schwellwertkurve um das Feld der Meßwerte gelegt. Die Schwellwertkurve wird danach um die Koordinaten des Schwerpunkts verschoben und um den Phasenwinkel der Achse gedreht. Bei der nachfolgenden Messung von Prüflingen für die Fehlerekennung werden die Meßwerte mit den Werten der transformierten Schwellwertkurve unmittelbar verglichen.

Fig. 3

## Verfahren und Vorrichtung zur Werkstoffprüfung nach dem Wirbelstromprinzip

Die Erfindung bezieht sich auf ein Verfahren zur Werkstoffprüfung nach dem Wirbelstromprinzip, bei dem von einer gegenüber Prüflingen bewegten Spule magnetische Wechselfelder mit wahlsweise unterschiedlichen Frequenzen erzeugt werden, die im jeweiligen Prüfling Wirbelströme induzieren, die in der Spule oder einer Fühlerspule ein sekundäres Feld hervorrufen, wobei die Meßwerte jeweils in Real-und Imaginäranteile zerlegt werden, sowie auf eine Vorrichtung zur Durchführung des Verfahrens.

Bei der zerstörungsfreien Materialprüfung mittels Wirbelströmen geschieht die Fehlerfeststellung an Hand von kleinen Änderungen eines relativ großen Signals. Diese kleinen Änderungen lassen sich mit dem Brückenmeßverfahren erfassen. Eine Brückenschaltung wird bei Wirbelstromprüfgeräten bereits in der Prüfspule oder im Gerät vorgesehen. Der Meßvorgang läuft dabei folgendermaßen ab. Zunächst wird die Brückenschaltung automatisch oder manuell abgeglichen. Die Phasenlage der Meßsignale wird in eine Achse der komplexen Ebene gedreht, um im Meßsignale vorhandene Störsignale zu beseitigen. Eine solche Trennung ist möglich, wenn sich die Störsignale von den Fehlersignalen hinsichtlich der Phasenlage unterscheiden. Danach wird der auf die Achse, die sogenannte Auswerteachse, entfallende Signalteil des Meßsignals mit einer Sortierschwelle, die nur für diese Achse oder einen Sektor der Achse wirkt, verglichen. Überschreitet der Signalteil die Sortierschwelle, dann liegt ein Fehler vor, der gemeldet bzw. registriert wird.

bei analog arbeitenden Wirbelstromprüfgeräten ergeben sich enge Grenzen bezüglich der Fehlerauflösung und Störunterdrückung. Mit digitalen Wirbelstromprüfgeräten lassen sich bessere Fehlerauflösungs-und Störunterdrückungswerte erreichen. Allerdings ist hierfür ein größerer - schaltungstechnischer Aufwand erforderlich. Darüber hinaus läuft bei digitalen Geräten die Verarbeitung der Signale im allgemeinen langsamer ab als bei analogen Geräten.

Es ist bereits eine digital arbeitende Vorrichtung zur Werkstoffprüfung nach dem Wirbelstromprinzip bekannt, bei der verschiedene Prüffrequenzen verwendet werden. In Abhängigkeit von den Ausgangsgrößen der Spule werden bei den verschiedenen Frequenzen Kompensationsgrößen erzeugt, die für Störgrößen typisch sind. Diese Kompensationsgrößen werden anschließend den Ausgangsgrößen überlagert, um den Einfluß der Störgrößen auf die Messung zu beseitigen (DE-OS 31 25 732).

Bei einer anderen bekannten digital arbeitenden Vorrichtung zur Prüfung von Werkstoffen nach dem Wirbelstromprinzip werden die während eines Prüfzyklus auftretenden komplexen Meßwerte zunächst daraufhin untersucht, ob nur Störsignale, Störsignale in Verbindung mit Fehlersignalen oder nur Fehlersignale vorhanden sind. Wenn nur Fehlersignale vorhanden sind, werden die Meßwerte unmittelbar weiterverarbeitet. Bei Störsignalen in Verbindung mit Fehlersignalen werden zuerst die Störsignale beseitigt, bevor die Fehlersignale für die Fehlertiefenbestimmung weiterverarbeitet werden (DE-OS 32 13 267).

Der Erfindung liegt die Aufgabe zugrunde, ein Verfahren der eingangs beschriebenen Art so weiterzuentwickeln, daß durch eine besondere Art der digitalen Signalverarbeitung eine schnellere Verarbeitung und Auswertung der Meßsignale erreicht wird.

Die Aufgabe wird erfindungsgemäß durch die im Anspruch 1 beschriebenen Maßnahmen gelöst. Der Bestimmung des Schwerpunktes gemäß dem Verfahren des Anspruchs 1 wird die flächenmäßige Verteilung der Meßwerte zugrundegelegt. Die Meßwerte bilden nach der Digitalisierung und der Umwandlung in ihren Real-und Imaginärteil Punkte in der komplexen Ebene, deren Lage durch ein Raster bestimmt ist, dessen Teilung der Stelle mit dem niedrigsten Stellenwert der digitalen Meßwerte entspricht. Die Lage der Meßwerte in der komplexen Ebene ist daher durch die Punkte eines Gitters gegeben. Die äußeren Punkte des von den komplexen Meßwerten gebildeten Gitters legen die Grenze des Feldes fest, dessen Schwerpunkt bestimmt wird. Der Phasenwinkel des Feldes ergibt sich als Mittelwert der Phasen der Achsen durch den Mittelpunkt des Koordinatensystems und die von den Meßwerten gebildeten Gitterpunkte. Bei dem Verfahren gemäß dem Anspruch 1 werden die bei der Messung von gegebenenfalls fehlerbehafteten Prüflingen erhaltenen Meßwerte unmittelbar mit gespeicherten Schwellwerten verglichen. Ein Vergleich digitaler Signale benötigt relativ wenig Zeit. Deshalb lassen sich auch mit relativ langsam arbeitenden, digitalen Schaltkreisen hohe Verarbeitungsgeschwindigkeiten erzielen. Durch den Einsatz der relativ langsam arbeitenden digitalen Schaltkreise lassen sich digital arbeitende Wirbelstromprüfgeräte besonders wirtschaftlich herstellen.

Bevorzugte Ausführungsformen des Anspruchs 1 ergeben sich aus den Ansprüchen 2 bis 4.

Eine Vorrichtung insbesondere zur Durchführung des Verfahrens nach Anspruch 1 mit einer gegenüber Prüflingen bewegten Spule, mit der magnetische Wechselfelder mit wahlweise unterschiedlichen Frequenzen erzeugt werden, die im jeweiligen Prüfling Wirbelstöme induzieren, die in der Spule oder einer Fühlerspule ein sekundäres Feld hervorrufen, wobei der Spule oder Fühlerspule eine Auswerteeinrichtung nachgeschaltet ist, die eine Einheit für die Zerlegung der Meßwerte in ihre Real-und Imaginäranteile, Analog-Digital-Wandler, die an einen Bus angeschlossen sind, und einen Rechner sowie einen Massenspeicher und Komparatoren enthält, zeichnet sich dadurch aus, daß der an den Bus angeschlossene Massenspeicher für die Imaginär-und Realanteile der Meßwerte der Anzahl von fehlerfreien Prüflingen vorgesehen ist und daß die Komparatoren mit ersten Eingängen an den Bus und mit zweiten Eingängen an einen Speicher für Schwellwerte angeschlossen sind, dessen Inhalte über den Rechner eingebbar sind, der weiterhin mit den Ausgängen des Massenspeichers verbunden ist.

Ausgestaltungen ergeben die Ansprüche 6 bis 8.

Weitere Einzelheiten, Merkmale und Vorteile der Erfindung ergeben sich nicht nur aus den Ansprüchen, den diesen zu entnehmenden Merkmalen -für sich und/oder in Kombinations-, sondern auch aus der folgenden Beschreibung eines zeichnerisch dargestellten Ausführungsbeispiels.

Es zeigen:

Fig. 1a bis 1d Diagramme von in der komplexen Ebene angezeigten Meßsignalen für verschiedene Einstellstufen von an sich bekannten Wirbelstromprüfgeräten,

Fig. 2a bis 2e Diagramme von in der komplexen Ebene angezeigten Meßsignalen und Schwellenwerten für verschiedene Einstellstufen von nach dem erfindungsgemäßen Verfahren arbeitenden Wirbelstromprüfgeräten,

Fig. 3 ein Schaltbild einer Vorrichtung zur Werkstoffprüfung nach dem Wirbelstromprinzip.

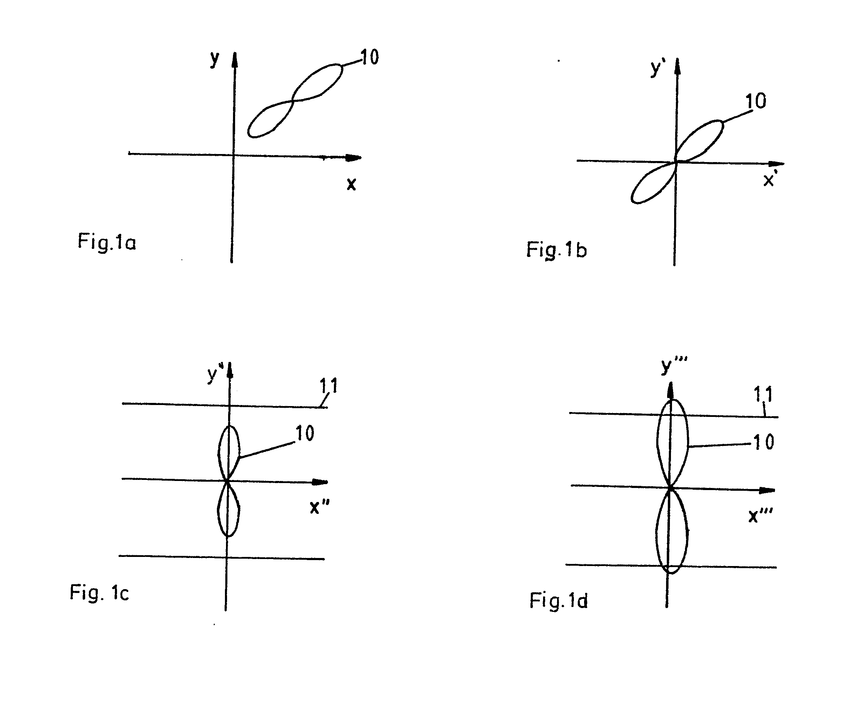

In Fig. 1a ist in der komplexen karthesischen Ebene der Verlauf eines Meßsignals bei einer Relativbewegung zwischen einem Prüfling und einer Spule bzw. Fühlerspule eines analog arbeitenden Wirbelstromprüfgeräts dargestellt, das noch nicht abgeglichen ist. Das Meßsignal beschreibt eine Schleife (10), deren Größe und Form ein Maß für Fehler im Prüfling ist. Durch Störgrößen ist das Meßsignal mehr oder weniger stark gegen den Nullpunkt des karthesischen Koordinatensystems der komplexen Ebene verschoben. Um den Einfluß von Störgrößen zu vermindern, werden die Störsignale durch Abgleichmaßnahmen soweit wie möglich unwirksam gemacht. Nach dem Abgleich haben die Meßsignale die in Fig. 1b dargestellte Art des Verlaufs, d.h. die Schleife (10) ist mehr oder weniger stark gegen den Nullpunkt der Koordinatenachsen X bzw. Y hin verschoben. Weiterhin wird die Phasenlage der Schleife (10) des Meßsignals geändert. Die Phasenlage wird so weit gedreht, daß wenigstens ein Maximum in eine Koordiantenachse fällt. Das Meßsignal hat dann in der komplexen Ebene einen Verlauf, wie er in Fig. 1c dargestellt ist. Das Meßsignal wird nach Drehung, Kompensation und Verstärkung mit einer Sortierschwelle (11) verglichen, die ein Maß für Materialfehler ist. Die Schleife (10) nach den vorstehend angegebenen Verfahrensschritten ist in Fig. 1d dargestellt. Wenn, wie in Fig. 1d gezeigt, die verstärkte Schleife (10) die Sortierschwelle (11) überschreitet, dann wird ein Sortiersignal bzw. eine Meldung erzeugt.

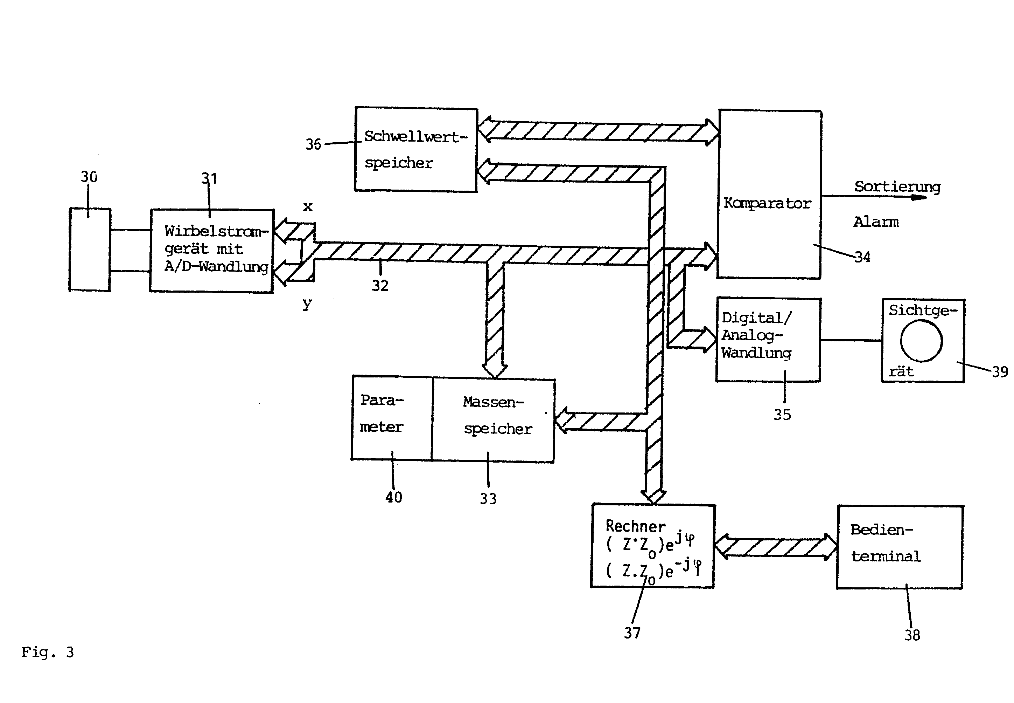

Bei dem Verfahren gemäß der Erfindung werden zunächst fehlerfreie Prüflinge nach dem Wirbelstromprinzip gemessen. Die Meßwerte werden in digitale Werte umgesetzt. Dabei werden gegebenenfalls vorhandene Störsignale festgestellt, die z.B. auf Unterschieden in den beiden Zweigen der in Differenz geschalteten Spulenhälften oder auf Abhebeeffekten beruhen. Damit lassen sich alle Störungen, die aus dem Prüfling heraus entstehen oder von der Führung und Lagerung des Prüflings bzw. der Spule herrühren, erfassen. Die Meßwerte der Prüflinge liegen innerhalb eines Feldes. Ein typisches Feld dieser Art ist in Fig. 2a dargestellt und mit (20) bezeichnet. Die Meßwerte des Feldes (20) werden für die weitere Verarbeitung gespeichert. Die Störsignale werden anschließend kompensiert.

Um die Kompensationswerte zu ermitteln, wird der Schwerpunkt des Feldes (20) bestimmt. Der Schwerpunkt wird nicht für die absolute Zahl der Meßwerte sondern für die flächenmäßige Verteilung der Meßwerte bestimmt. Jeder Meßwert geht nur einmal in die Bestimmung des Schwerpunkts ein. Von den Meßwerten wird eine Fläche bedeckt, deren Schwerpunkt kompensiert wird. Dabei kann sich ein Wert ergeben, der meßtechnisch nicht vorhanden oder sogar meßtechnisch nicht erreichbar ist. Herkömmliche Wirbelstromprüfgeräte sind deshalb auf einen solchen Wert nicht einstellbar. Den Meßwerten entsprechen Punkte der Fläche, die auf einem durch die Auflösung der Digitalwerte gegebenen Raster liegen. Es ergibt sich hierbei ein Gitter, durch dessen Randpunkte das Feld festgelegt wird. Die durch Meßwerte nicht besetzten Punkte des Gitters müssen für die Bestimmung des Schwerpunkts nicht aufgefüllt werden. Eine den Koordinaten des Schwerpunkts entsprechende Kompensation wird anschließend durchgeführt. Hierdurch wird das Feld in eine Position verschoben, die in Fig. 2b gezeigt ist. Der Schwerpunkt des Feldes (20) liegt im Nullpunkt des X-Y-Koordinatenfeldes der komplexen Ebene. Es - schließt sich ein weiterer Verfahrensschritt an, in den die mittlere Phasenlage des Feldes (20) ermittelt wird. Die mittlere Phasenlage wird durch Mittelung der Phasenlage der einzelnen Punkte erhalten. Das Feld (20) wird danach um den Phasenwinkel der mittleren Phasenlage in eine der Koordinatenachsen gedreht. Beispielsweise wird eine Drehung in die X-Koordinatenachse vorgenommen. Die Fig. 2c zeigt das um den entsprechenden Winkel gedrehte Feld (20). Der Zweck dieser Maßnahme ist darin zu sehen, die Hauptachse der Störsignale in die X-Koordinatenachse (bzw. Y-Koordinatenachse) zu legen, um auf der Y-Koordinatenachse - (bzw. X-Koordinatenachse) die kleinsten Störsignalpegel zu erhalten. In dieser Koordinatenachse ergibt sich demnach ein optimales Signal-zu-Stör-Verhalten. Die optimale Phasenlage ist dann vorhanden, wenn auf der ausgewählten Auswerteachse die kleinsten Störsignalpegel vorhanden sind. Danach werden mit Hilfe der die Grenze des Feldes (20) angebenden Meßwerte die Schwellwerte bestimmt, z.B. durch möglichst einfache geometrische Hüllkurven. Eine Hüllkurve, die aus einem Rechteck (21) besteht, ist in Fig. 2d dragestellt. Hierauf werden die Schwellwerte um die Koordinaten des Schwerpunktes und die Winkeldrehung in die Phasenlage des Feldes (20) transformiert. Das Rechteck ist eine sehr einfache Hüllkurve. Kompliziertere Kurvenformen können ebenfalls verwendet werden, wenn dies vom Aufwand her gerechtfertigt ist.

Die derart transformierten Schwellwerte bilden die Vergleichswerte für die von Prüflingen bei der Prüfung auf Fehler erhaltenen Meßwerte. In Fig. 2e ist das Rechteck (21) der transformierten Schwellwerte dargestellt. Wird mit die mittlere Phasenlage des Feldes (20) bezeichnet, dann beinhaltet der erste Kompensationsschritt, dessen Ergebnis in Fig. 2b gezeigt ist, eine Verschiebung der Meßwerte nach folgender Beziehung: Z -Zo, wobei mit Z die Positionen der Meßwerte in der komplexen Ebene und mit Zo die Position des Schwerpunkts der Meßwerte bezeichnet ist.

Die Phasendrehung läßt sich durch die Beziehung (Z -Zo) -ausdrücken. Wird mit So die Position der Schwellwerte, wie sie sich aus Fig. 2d ergibt, bezeichnet, dann beinhaltet die Transformation den folgenden Vorgang:

$$S = (So + Zo)$$

wobei S die Position der transformierten Schwellwerte ist, die sich aus Fig. 2e ergibt. Da bei den oben erläuterten Verfahrensschritten die Meßwerte zuerst in die digitale Form umgesetzt und danach auf die angegebene Weise weiterverarbeitet werden, sind Regelhöhen, Rauschen und Dynamik im Vergleich zur analogen Fehlerfeststellung von untergeordneter Bedeutung.

Eine Vorrichtung zur Durchführung des oben erläuterten Verfahrens enthält eine Spule (30) bzw. eine Fühlerspule. Die Spule (30) ist mit einem nicht dargestellten Spulentreiber verbunden, mit dem eine oder auch verschiedene Frequenzen zeitlich nacheinander erzeugt werden. Die Spule (30) ist mit einem an sich bekannten Wirbelstromprüfgerät (31) verbunden, das eine Analog/Digital-Umsetzung der Meßwerte ausführt, und an seinem Ausgang jeweils den Real-und den Imaginäranteil der Meßwerte zur Verfügung stellt. Solche Wirbelstromprüfgeräte sind unter der Type DOS-01 und AEK-01 von der NUKEM GmbH, Rodenbacher Chaussee 6, Hanau, erhältlich. Die Real-und Imaginäranteile der Meßwerte gelangen im Anschluß an das Wirbelstromprüfgerät (31) auf einen Bus (32), an den ein Massenspeicher (33) mit seinen Eingängen, die ersten Eingänge von Komparatoren (34), die in Fig. 3 als eine Einheit dargestellt sind, und ein Digital-Analog-Wandler (35) angeschlossen sind. Die Komparatoren können aus handelsüblichen Logikbausteinen aufgebaut sein. Die Ausgänge des Massenspeichers (33) sind an die Eingänge eines Speichers (36) für die Schwellwerte und an einen Rechner (37), z.B. einen Mikroprozessor, angeschlossen. Als Rechner (37) kann ein Prozessor eingesetzt werden, der z. B. unter der Type SAC 200 oder der Type MC 6800 von den Firmen Eltec und Force kommerziell erhältlich ist. Die Ausgänge des Speichers (36) für die Schwellwerte speisen die zweiten Eingänge der Komparatoren (34), die jeweils bei Überschreiten der Schwellwerte in Abhängigkeit von der entsprechenden Betriebsart eine Meldung als Alarm und/oder an eine Sortiereinrichtung abgeben, die den fehlerbehafteten Prüfling absondert. Der Rechner (37) ist weiterhin mit einem Bedienterminal - (38) verbunden. An den Digital/Analog-Wandler - (35) ist ein Sichtgerät (39) angeschlossen. Im Massenspeicher (33) ist ein Bereich (40) für Parameter reserviert.

Die in Fig. 3 dargestellte Anordnung arbeitet in zwei Betriebsarten, nämlich einer "Lernbetriebsart" und einer "Meßbetriebsart". Die Betriebsarten werden durch das Bedienterminal (38) eingestellt.

In der "Lernbetriebsart" werden fehlerfreie Prüflinge zur Ermittlung des in Fig. 2a gezeigten Feldes (20) gemessen. Die Meßwerte gelangen in den Massenspeicher (33). Mit den Meßwerten werden alle bei der Prüfung auftretenden Störungen berücksichtigt. Dies ist gegenüber den bekannten Wirbelstromprüfgeräten ein wesentlicher Vorteil. Durch die Berücksichtigung aller Störungen läßt sich eine optimale Einstellung des Prüfgeräts erreichen. Es hat sich gezeigt, daß es günstig ist, etwa 10 bis 20 Prüflinge bzw. 10 bis 20 m Rohr bei rohrförmigen Prüflingen in der Lernbetriebsart zu verwenden. Falls bei der nachfolgenden Meßbetriebsart noch einige Extremwerte festgestellt werden, können diese in einer "Nachlernphase" berücksichtigt werden, indem die Punkte dem Feld (20) hinzugeführt werden, woran sich eine weitere "Lernbetriebsart" anschließt. Die Einstellung der bekannten Wirbelstromprüfgeräte stützt sich demgegenüber auf ein einzelnes Testrohr, so daß eine optimale Einstellung nur durch Zufall möglich wäre. Dieser Zufall ist darin zu sehen, daß das Testrohr zufällig den optimalen Kompensataionspunkt liefert bzw. die Phasenlage des Störers wiedergibt.

Nach Beendigung der Messung einer Reihe von Prüflingen werden die Meßwerte auf die oben erläuterte Art verarbeitet. Prozessoren der Type SAC 200 oder MC 6800 sind so ausgebildet, daß sich mit ihrer Hilfe die in Fig. 2a bis 2e dargestellten Transformationsschritte ausführen lassen. Die einzelnen Verarbeitungsschritte werden, wie in Fig. 2a bis 2c gezeigt, nacheinander auf dem Sichtgerät (39) unter Steuerung durch den Rechner (37) graphisch und zahlenmäßig dargestellt. Wenn das die Meßwerte umfassende Datenpaket mit den Kompensations-und Phasendrehwerten korrigiert ist, lassen sich die Schwellwerte optimal um dieses Feld legen. Auch hier gibt es einen Vorteil gegenüber den bekannten Geräten. Das Meßsignal wird nicht so weit verstärkt, daß es die Sortierschwelle überschreitet, sondern die Schwellen werden den Fehlersignalen angepaßt. Bei gleichbleibender analoger Verstärkung der Meßsignale wird somit die Kurve der Schwellwerte jeweils an die Fehlersignale angepaßt. Damit ist die größtmögliche Dynamik garantiert.

Die ermittelten Schwellwerte gelangen durch die inverse Transformation in den Wertebereich der Originalmeßdaten. Die Übertragung der Schwellwerte in den Speicher (36) kann nach der Umschaltung von der "Lernbetriebsart" in die "Meßbetriebsart" erfolgen.

Die Meßelektronik muß dann im Meßbetrieb nur den Vergleich zwischen Soll-und Istwert durchführen, was auch mit einfachen Rechenwerken mit ausreichender Geschwindigkeit möglich ist. Im Prüfbetrieb vergleichen die Komparatoren (34) lediglich, ob der im Schwellwertspeicher (36) abgelegte Wertesatz von dem Meßsignal überschritten wird. In diesem Falle erfolgt ein Sortier-oder Alarmsignal. Die Komparatoren (34) stellen also fest, ob das jeweils gemessene, aus komplexen Zahlen bestehende Wertepaar im Schwellwertspeicher (36) "gesetzt" ist oder nicht. Jedes aus komplexen Zahlen bestehende Wertepaar stellt die Koordinaten eines Gitterpunkts in der Fläche der Meßwerte dar. Diese Fläche ist oben als Feld (20) bezeichnet. Jedem Gitterpunkt ist eine Speicherzelle des Schwellwertspeichers (36) zugeordnet. Ein aus den beiden komplexen Zahlen eines Meßwerts bestehendes Wertepaar bildet eine Speicheradresse. Der Inhalt der entsprechenden Speicherzelle gibt an, ob der Meßwert innerhalb des Felds (21) liegt oder nicht. Die Speicherplätze beziehen sich jeweils auf den kleinsten digitalen Schritt, mit dem die Meßwerte aufgelöst werden. Trotz der Gitterstruktur, durch die das jeweilige Feld bestimmt wird, ergeben sich daher keine Lücken. In der Lernbetriebsart füllt der Rechner (37) Gitterpunkt für Gitterpunkt die entsprechenden Werte in den Massenspeicher (33). Nach der Transformation sind die Werte im Schwellwertspeicher (36) vorhanden. Falls größere Lücken zwischen den Gitterpunkten vorhanden sind, können Zwischenwerte durch Interpolation erhalten und in entsprechende Speicherplätze eingegeben werten. Es hat sich gezeigt, daß bei einer Prüfgeschwindigkeit von 6m/s die Prüfung mit einer Taktrate von 5 KHz ablaufen kann, ohne daß zeitlich Schwierigkeiten bei Vergleich und bei der weiteren Verarbeitung des Ergebnisses auftreten. Die Meßdaten werden parallel dem D/A-Wandler (35) zugeführt, der das Sichtgerät (39) ansteuert. Die Anlage wird bedient über ein handelsübliches Terminal (z.B. VT 100 von DEC).

Um die Geräteeinstellung bei bekannten Prüflingen weiter zu vereinfachen, hat der Massenspeicher (33) den Bereich (40) reserviert, in dem ganze Parametersätze (Meßfrequenz, Dämpfung, Schwellen etc.) unter einem Schlüsselwort abgelegt sind. Über das Bedienterminal (38) ist eine Liste mit allen Parametersätzen aufruf-und anwählbar.

## Ansprüche

1. Verfahren zur Werkstoffprüfung nach dem Wirbelstromprinzip, bei dem von einer gegenüber Prüflingen bewegten Spule magnetische Wechselfelder mit wahlweise unterschiedlichen Frequenzen erzeugt werden, die im jeweiligen Prüfling Wirbelströme induzieren, die in der Spule oder einer Fühlerspule ein sekundäres Feld hervorrufen, wobei die Meßwerte jeweils in Real-und Imaginäranteile zerlegt werden,
**dadurch gekennzeichnet,**
daß in einer ersten Betriebsart zuerst eine Anzahl von fehlerfreien Prüflingen, die jeweils gleichen Aufbau und gleiche Abmessungen haben, gemessen werden, daß die erhaltenen Meßwerte in einen Massenspeicher (33) eingegeben werden, daß nach dem Ende der Messungen mittels eines Rechners (37) die Koordinaten des Schwerpunktes eines Feldes (20) bestimmt werden, in dem die Punkte der Meßwerte liegen und das durch die Punkte der äußeren Meßwerte begrenzt ist, daß danach mit dem Rechner (37) der Phasenwinkel derjenigen Achse bestimmt wird, die in Längsrichtung durch das Feld (20) verläuft, daß anschließend durch den Rechner der Schwerpunkt des Feldes (20) in den Nullpunkt des Koordinatensystems verschoben und die Achse in eine Koordinatenachse gedreht werden, daß sodann mit dem Rechner (37) eine zumindest als Rechteck (21) das Feld (20) einschließende Schwellwertkurve erzeugt wird, die um die Koordinaten des Schwerpunktes und den Phasenwinkel der Achse gedreht wird, daß die transformierten Werte der Schwellwertkurve in einen Schwellwertspeicher (36) eingegeben werden und daß in einer zweiten Betriebsart Prüflinge für die Fehlererkennung gemessen und die Meßwerte mit den gespeicherten Werten der Schwellwertkurve unmittelbar in Komparatoren (34) verglichen werden.

2. Verfahren nach Anspruch 1,
**dadurch gekennzeichnet,**
daß der Phasenwinkel derjenigen Achse, die durch das von den Meßwerten in der komplexen Ebene gebildete Feld (20) verläuft, mit dem Rechner (37) als Mittelwert aus den Phasenwinkeln der Achsen, die durch den Nullpunkt des Koordinatensystems und durch die Punkte der komplexen Meßwerte im Koordinatensystem verlaufen, bestimmt wird.

3. Verfahren nach Anspruch 1 oder 2,
**dadurch gekennzeichnet,**
daß die Meßwerte jeweils bei der Messung, nach der Verschiebung um die Koordinaten des Schwerpunkts, nach der Drehung um den Phasenwinkel der Achse und in Verbindung mit der Schwellwertkurve auf einem Bildschirm dargestellt werden und daß die Schwellwertkurve nach der Verschiebung um die Koordinaten des Schwerpunkts und nach der Drehung um den Phasenwinkel der Achse auf dem Bildschirm dargestellt wird.

4. Verfahren nach Anspruch 1 oder einem der vorhergehenden Ansprüche,
**dadurch gekennzeichnet,**
daß die Schwellenwerte der Schwellwertkurve bei gleichbleibender analoger Verstärkung der Meßwerte an die Fehlersignale angepaßt werden.

5. Vorrichtung mit einer gegenüber Prüflingen bewegten Spule, mit der magnetische Wechselfelder mit wahlweise unterschiedlichen Frequenzen erzeugt werden, die im jeweiligen Prüfling Wirbelströme induzieren, die in der Spule oder einer Fühlerspule ein sekundäres Feld hervorrufen, wobei der Spule oder Fühlerspule eine Auswerteeinrichtung nachgeschaltet ist, die eine Einheit für die Zerlegung der Meßwerte in ihre Real-und Imaginäranteile, Analog-Digital-Wandler, die an einen Bus angeschlossen sind, und einer Rechner sowie einen Massenspeicher und Komparatoren enthält, zur Durchführung des Verfahrens nach einem der vorhergehenden Ansprüche,
**dadurch gekennzeichnet,**
daß der an den Bus (32) angeschlossene Massenspeicher (33) für die Imaginär-und Realanteile der Meßwerte der Anzahl von fehlerfreien Prüflingen vorgesehen ist und daß die Komparatoren (34) mit ersten Eingängen an den Bus (32) und mit zweiten Eingängen an einen Speicher (36) für Schwellwerte angeschlossen sind, dessen Inhalte über den Rechner (37) eingebbar sind, der weiterhin mit den Ausgängen des Massenspeichers verbunden ist.

6. Vorrichtung nach Anspruch 5,
**dadurch gekennzeichnet,**
daß an den Bus (32) ein Digital/Analog-Wandler - (35) angeschlossen ist, dem ein Sichtgerät (39) mit einem Bildschirm nachgeschaltet ist.

7. Vorrichtung nach Anspruch 5 oder 6
**dadurch gekennzeichnet,**
daß im Massenspeicher (33) ein Bereich (40) für Parametersätze reserviert ist.

8. Vorrichtung nach Anspruch 5 oder einem der folgenden Ansprüche,
**dadurch gekennzeichnet,**
daß durch die digitalen Real-und Imaginäranteile der jeweiligen Meßwerte, die bei der nachfolgenden Messung von Prüflingen auftreten, im Massenspeicher (33) Speicherzellen adressierbar sind, deren Inhalte auf die Lage der Meßwerte bezüglich der transformierten Schwellwertkurve abgestimmt sind.

0 224 230

y
10

x

Fig.1a

y'
10

x'

Fig.1b

y"
11
10

x"

Fig. 1c

y'''
11
10

x'''

Fig.1d

Fig. 3